# EUROPEAN PATENT APPLICATION

(11) **EP 1 887 817 A2**
(43) Date of publication of application: **13.02.2008**
(21) Application number: 07113995.0
(22) Date of filing: 08.08.2007
(51) Int. Cl.: H04Q 7/32

(54) **Communication apparatus and method for controlling the same**

(30) Priority: 09.08.2006 KR 20060075338
(71) Applicant: LG Electronics Inc., Seoul 150-721 (KR)
(72) Inventor: Oh, Jang Geun, Gyeonggi-do, Suwon City 441-721 (KR)
(74) Representative: Vossius & Partner

(57) **Abstract**

The present invention relates to a communication apparatus and a method for controlling the same, which controls an operation mode of a communication unit in a portable terminal capable of supporting the portable Internet (Wibro). In the present invention, when the communication unit of the portable terminal that provides the Wibro service is in a sleep mode, the communication unit is not periodically switched (waken up) to a normal mode but is switched to the normal mode only when a traffic indication message containing a mode-setting value for returning to the normal mode is received from a base station. Then, the portable terminal can receive a signal transmitted from the base station through the Wibro. Therefore, the present invention has an advantage in that power consumption of the portable terminal is reduced when the Wibro service is not used.

## Description

The present invention relates to a communication apparatus (Wibro), and more particularly, to a communication apparatus and a method for controlling the same, wherein a communication unit of the communication apparatus is switched from a sleep mode to a normal mode in accordance with a mode-setting value received from a base station.

With the remarkable development in electronic communication technology, a variety of wireless communication services using wireless networks are provided. Accordingly, services provided by mobile communication systems using wireless communication networks are developed into multimedia communication services for transmitting circuit data, packet data and the like as well as into voice services.

Accordingly, the Wireless Broadband (Wibro), which is a high-speed portable Internet service that guarantees portability and mobility while providing communication services at an inexpensive price, has come to the front.

In order to use the Wibro service, a communication unit that is a portable Internet unit should be provided within various types of portable terminals such as a notebook computer and a personal digital assistant (PDA). Therefore, a user can connect to the Internet and receive a variety of information and contents not only in an indoor or outdoor stand-still environment, but also in a mobile environment of a walking-speed level or a medium- or low-speed level. Furthermore, techniques for providing services even in a high-speed mobile environment are being developed.

Here, the communication unit is set to be automatically switched to a sleep mode if data transmission is blocked for a predetermined period of time in order to save power consumed by a portable terminal.

However, there is inconvenience in that data containing information on a sleep interval need to be provided to a base station to switch the communication unit to the sleep mode.

Furthermore, since the communication unit automatically wakes up after a predetermined period of time is elapsed even though it has been switched to the sleep mode, power is supplied to the communication unit even while the Wibro service is not used, resulting in unnecessary power consumption.

Accordingly, an object of the present invention is to provide a communication apparatus and a method for controlling the same, wherein a communication unit of the communication apparatus is switched to a normal mode in accordance with a mode-setting value contained in a traffic indication message received from a base station.

Another object of the present invention is to provide a communication apparatus and a method for controlling the same, wherein a communication unit of the communication apparatus is simply switched from a sleep mode to a normal mode.

A further object of the present invention is to provide a communication apparatus and a method for controlling the same, wherein power consumption is reduced by minimizing power applied to a communication unit of the communication apparatus.

According to an aspect of the present invention for achieving the objects, there is provided a communication apparatus comprising a communication unit for performing communication with a base station, and a mode control unit for performing control such that a mode state of the communication unit is selectively switched in accordance with a message received from the base station.

The communication unit may comprise an RF transceiver unit for performing communication with the base station; and a storage unit for temporarily storing a mode-setting value contained in a traffic indication message received through the RF transceiver unit.

The communication unit may transmit a sleep request message to the base station and perform switching to a sleep mode in accordance with a response message corresponding to the sleep request message.

The communication unit may be a portable Internet unit.

The storage unit may be a buffer memory that automatically deletes the mode-setting value if the mode-setting value is applied to the mode switching.

The mode control unit may comprise a trigger generation unit for generating a trigger signal to switch the mode state of the communication unit in accordance with a mode-setting value contained in the received message.

The mode control unit may be an embedded controller for performing control such that the mode state of the communication unit is switched in accordance with a mode-setting value contained in the received message.

The mode control unit may be a microcomputer for performing control such that the mode state of the communication unit in accordance with a mode-setting value contained in the received message.

The mode control unit may maintain the communication unit in a sleep mode if the mode-setting value is a first mode value (negative), and perform control such that the communication unit is switched to a normal mode if the mode-setting value is a second mode value (positive).

According to another aspect of the present invention, there is provided a method for controlling a communication apparatus, comprising the steps of receiving a communication service request message from a communication unit of the communication apparatus that is in a sleep mode; checking a mode-setting value contained in the communication service request message; and performing control such that a mode state of the communication unit is selectively switched in accordance with the mode-setting value.

The method may further comprise the step of receiving a sleep response message from a base station in response to a sleep request message, and switching the mode state of the communication unit from a normal mode to the sleep mode.

The method may further comprise the steps of transmitting a data transmission request message to a base station if the communication unit is switched to a normal mode; and receiving data transmitted from the base station.

The mode-setting value may be either a first mode value (negative) for maintaining the communication unit in the sleep mode or a second mode value (positive) for switching the communication unit to a normal mode.

The step of performing control of switching of the mode state may comprise the step of, if it is checked that the mode-setting value is the first mode value, continuously maintaining the sleep mode of the communication unit.

The step of performing control of switching of the mode state may comprise the steps of, if it is checked that the mode-setting value is the second mode value, generating a trigger signal for switching the communication unit to the normal mode; and performing control such that the communication unit is switched to the normal mode in response to the trigger signal.

The checking step may comprise the step of checking the mode-setting value in a polling scheme.

According to the present invention constructed as above, since the communication unit that is currently in a sleep mode is switched to a normal mode in accordance with a mode-setting value contained in a traffic indication message transmitted from a base station, it can be seen that power is supplied only while a communication service is provided. Therefore, there is an advantage in that power consumed by the communication unit can be reduced.

The above and other objects, features and advantages of the present invention will become apparent from the following description of preferred embodiments given in conjunction with the accompanying drawings, in which:

Fig. 1 is a block diagram schematically showing the configuration of a communication apparatus according to a preferred embodiment of the present invention; and

Fig. 2 is a flow diagram illustrating a method for controlling a communication apparatus according to a preferred embodiment of the present invention.

Hereinafter, a communication apparatus and a method for controlling the same according to the present invention will be described in detail with reference to the accompanying drawings.

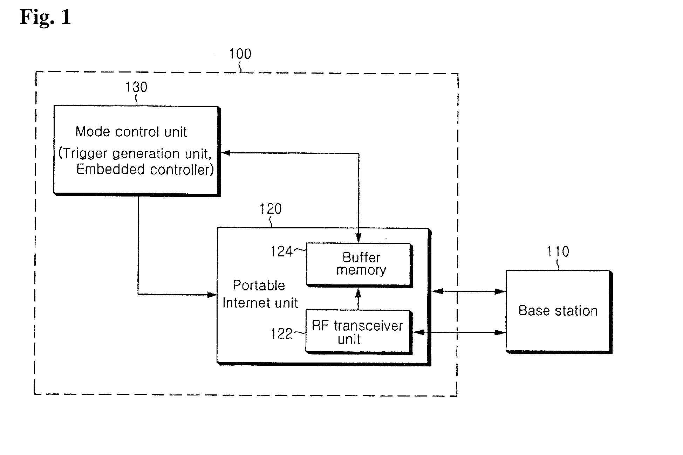

Fig. 1 is a block diagram showing the configuration of a communication apparatus according to a preferred embodiment of the present invention.

The present invention provides a communication apparatus (e.g., terminal) 100 for transmitting and receiving data to and from a base station 110 that serves as a repeater.

The terminal 100 is provided with a portable Internet unit 120 as a communication unit for transmitting and receiving data to and from the base station 110. The portable Internet unit 120 has an RF transceiver unit 122 for receiving a traffic indication message MOB_TRF-IND even when the terminal 100 is in a sleep mode.

In addition, the portable Internet unit 120 has a buffer memory 124 for receiving the traffic indication message transmitted from the base station 110 through the RF transceiver unit 122 and temporarily storing a mode-setting value contained in the traffic indication message. The buffer memory 124 can temporarily store data information provided by the base station 110 even when the terminal 100 is in a sleep mode, thereby preventing loss of data. Here, it is preferred that the mode-setting value stored in the buffer memory 124 be automatically deleted when the mode of the portable Internet unit 120 has been switched in accordance with the mode-setting value.

Two types of mode-setting values are selectively included in the traffic indication message. The mode-setting values are a first mode value (negative) for maintaining the portable Internet unit 120 in a sleep mode and a second mode value (positive) for switching the portable Internet unit 120 to a normal mode.

The terminal 100 is provided with a mode control unit 130 for switching a mode state of the portable Internet unit 120 in accordance with the mode-setting value stored in the buffer memory 124. Here, the mode control unit 130 has a trigger circuit (not shown), which is a trigger generation unit for selectively generating a trigger signal in accordance with the mode-setting value. In addition, the mode control unit 130 may be an embedded controller or a microcomputer for reading the mode-setting value stored in the buffer memory 124 and generating a mode-switching signal to directly switch the portable Internet unit 120 to a normal mode in accordance with a result of the reading. Although the trigger generation unit, the embedded controller or the microcomputer is selectively provided as the mode control unit 130, the function of switching the mode state of the portable Internet unit 120 is the same in any case. However, since signals generated to perform the switching function and processes of controlling the switching are different from one another in the trigger generation unit, the embedded controller and the microcomputer, they will be separately described below.

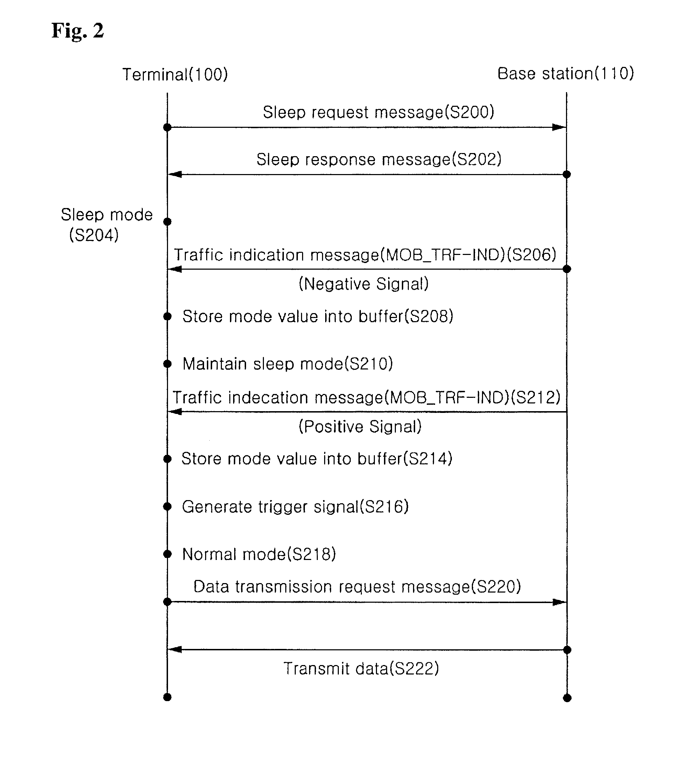

Next, a method for controlling a communication apparatus according to a preferred embodiment of the present invention will be described in detail with reference to Figs. 1 and 2.

Fig. 2 shows a flow diagram illustrating respective steps of a method for controlling the communication apparatus according to the preferred embodiment of the present invention.

First, a description will be made in connection with a case where a trigger generation unit is employed as the mode control unit 130.

In this case, if a communication service is not used, the terminal 100 transmits a sleep request message MOB_SLP-REQ to the base station 110 through the RF transceiver unit 122 in order to switch the portable Internet unit 120 of the terminal 100 to a sleep mode (step S200). Then, the base station 110 determines whether to approve the transmitted sleep request message MOB_SLP-REQ and transmits a sleep response message MOB_SLP-RSP for switching the portable Internet unit 120 to the sleep mode to the terminal 110 (step S202).

Accordingly, the terminal 100 switches the power state of the portable Internet unit 120 to the sleep mode in step S204.

Thereafter, the base station 110 transmits a traffic indication message MOB_TRF-IND containing a mode-setting value to the terminal 100 in which the portable Internet unit 120 is in the sleep mode. Accordingly, descriptions will be described in connection with two cases where the terminal 100 is continuously maintained in the sleep mode and is switched to a normal mode in accordance with the traffic indication message MOB_TRF-IND containing the mode-setting value.

First, a case where the mode-setting value of the transmitted traffic indication message MOB_TRF-IND is the first mode value (negative) will be described.

In step S206, if the traffic indication message MOB_TRF-IND of the first mode value (negative) is transmitted, the RF transceiver unit 122 provided in the portable Internet unit 120 receives the traffic indication message MOB_TRF-IND. Then, the buffer memory 124 temporarily stores the first mode value (negative) contained in the traffic indication message MOB_TRF-IND (step S208).

Then, in step S210, the trigger generation unit 130 does not generate a trigger signal in accordance with the first mode value (negative) stored in the buffer memory 124. Therefore, the terminal 100 is continuously maintained in the sleep mode. Here, the RF transceiver unit 122 can receive the traffic indication message or the like even while the portable Internet unit 120 is in the sleep mode.

Second, a case where the mode-setting value of the transmitted traffic indication message MOB_TRF-IND is the second mode value (positive) will be described.

In step S212, if the traffic indication message MOB_TRF-IND of the second mode value (positive) is transmitted, the RF transceiver unit 122 provided in the portable Internet unit 120 receives the traffic indication message MOB_TRF-IND. Then, the buffer memory 124 temporarily stores the second mode value (positive) contained in the traffic indication message MOB_TRF-IND (step 5214).

Then, the trigger generation unit 130 generates a trigger signal and switches the portable Internet unit 120 to the normal mode in accordance with the second mode value (positive) stored in the buffer memory 124, i.e., a value that instructs the terminal to be ready since there are data to be transmitted (steps S216 and S218). That is, if the base station 110 has data to be transmitted to the terminal 100, the traffic indication message has the second mode value (positive). At this time, if mode switching is completed, the buffer memory 124 preferably deletes the second mode value temporarily stored in step 5214.

If the portable Internet unit 120 is switched to the normal mode in step S218, the terminal 100 transmits a data transmission request message to the base station 110 through the portable Internet unit 120 to notify that the portable Internet unit 120 is currently in the normal mode (step S220).

Accordingly, the base station 110 transmits certain data to be transmitted to the portable Internet unit 120 of the terminal 100 (step S222).

Next, although not shown in the drawings, a case where an embedded controller or a microcomputer is employed as the mode control unit 130 will be briefly described.

If a communication service is not used, the terminal 100 transmits a sleep request message MOB_SLP-REQ to the base station 110 through the RF transceiver unit 122 in order to switch the portable Internet unit 120 of the terminal 100 to the sleep mode.

Then, the base station 110 determines whether to approve the transmitted sleep request message MOB_SLP-REQ and transmits a sleep response message MOB_SLP-RSP to the terminal 110 in order to switch the portable Internet unit 120 to the sleep mode.

In response thereto, the terminal 100 switches the portable Internet unit 120 to the sleep mode.

Next, the base station 110 transmits a traffic indication message containing a mode-setting value to the terminal 100 in a state where the portable Internet unit 120 is in the sleep mode. That is, the base station 110 transmits a traffic indication message containing a mode-setting value of either the first mode value (negative) or the second mode value (positive) to the terminal 100.

Then, the RF transceiver unit 122 provided in the portable Internet unit 120 receives the traffic indication message, and the buffer memory 124 temporarily stores the mode-setting value contained in the traffic indication message.

Accordingly, the embedded controller or the microcomputer reads the mode-setting value temporarily stored in the buffer memory 124 and generates a mode-switching signal in accordance with the mode-setting value.

If the mode-setting value is the second mode value (positive), the embedded controller or the microcomputer generates a mode-switching message, i.e., a wake-up signal, to switch the portable Internet unit 120 to the normal mode. On the contrary, if the mode-setting value is the first mode value (negative), the embedded controller or the microcomputer maintains the sleep mode. Here, the embedded controller or the microcomputer, which is the mode control unit 130, consecutively checks the mode-setting value stored in the buffer memory 124 in a polling scheme.

If the portable Internet unit 120 is switched to the normal mode, the terminal 100 transmits a data transmission request message to the base station 110 through the portable Internet unit 120 to notify that the portable Internet unit 120 is currently in the normal mode.

In response thereto, the base station 110 transmits certain data to the portable Internet unit 120 of the terminal 100.

It is understood from the aforementioned steps in the present invention that the portable Internet unit 120 currently in a sleep mode is switched to a normal mode in accordance with a mode-setting value contained in a traffic indication message transmitted from the base station 110, thereby supplying power only when a portable Internet service is used. Accordingly, the present invention has an advantage in that power consumed by the portable Internet unit 120 can be reduced.

It is expected to obtain the following effects from the communication apparatus and the method for controlling the same according to the present invention described above in detail.

According to the present invention, since a communication unit of the communication apparatus currently in a sleep mode is switched to a normal mode in accordance with a mode-setting value contained in a traffic indication message transmitted from a base station, power can be supplied only when a communication service is provided. Thus, the present invention has an advantage in that power supplied to the communication unit can be saved.

Furthermore, the present invention has an advantage in that the communication unit in the sleep mode can be simply switched to the normal mode.

Although the present invention has been described above in connection with the specific preferred embodiments, it is only for illustrative purposes. It will be readily understood by those skilled in the art that various modifications, changes and equivalents can be made thereto without departing from the spirit and scope of the present invention. Therefore, the true technical scope of the present invention should be defined by the appended claims.

## Claims

1. A communication apparatus, comprising:
a communication unit for performing communication with a base station; and
a mode control unit for controlling a mode state of the communication unit such that the mode state of the communication unit is selectively switched in accordance with a message received from the base station.

2. The apparatus as claimed in claim 1, wherein the communication unit comprises:
an RF transceiver unit for performing communication with the base station; and
a storage unit for temporarily storing a mode-setting value contained in a traffic indication message received through the RF transceiver unit.

3. The apparatus as claimed in claim 1 or 2, wherein the communication unit transmits a sleep request message to the base station and performs switching to a sleep mode in accordance with a response message corresponding to the sleep request message.

4. The apparatus as claimed in any of claims 1 to 3, wherein the communication unit is a portable Internet unit.

5. The apparatus as claimed in any of claims 2 to 4, wherein the storage unit is a buffer memory that automatically deletes the mode-setting value if the mode-setting value is applied to the mode switching.

6. The apparatus as claimed in any of claims 1 to 5, wherein the mode control unit maintains the communication unit in a sleep mode if the mode-setting value is a first mode value, and switches the communication unit to a normal mode if the mode-setting value is a second mode value.

7. The apparatus as claimed in any of claims 1 to 6, wherein the mode control unit comprises:
a trigger generation unit for generating a trigger signal to switch the mode state of the communication unit in accordance with a mode-setting value contained in the received message.

8. The apparatus as claimed in any of claims 1 to 6, wherein the mode control unit is an embedded controller for switching the mode state of the communication unit in accordance with a mode-setting value contained in the received message.

9. The apparatus as claimed in any of claims 1 to 6, wherein the mode control unit is a microcomputer for switching the mode state of the communication unit in accordance with a mode-setting value contained in the received message.

10. The apparatus as claimed in any of claims 1 to 9, wherein the apparatus is a mobile phone, a notebook computer, or a PDA.

11. The apparatus as claimed in any of claims 1 to 10, wherein the message includes a mode-setting parameter for indicating the mode state of the communication unit to be either a sleep mode or a normal mode.

12. A method for controlling a communication apparatus, comprising the steps of:
receiving a communication service request message from a communication unit of the communication apparatus that is in a sleep mode;
checking a mode-setting value contained in the communication service request message; and
controlling a mode state of the communication unit to be selectively switched in accordance with the mode-setting value.

13. The method as claimed in claim 12, further comprising the step of:
receiving a sleep response message from a base station in response to a sleep request message; and
switching the mode state of the communication unit from a normal mode to the sleep mode.

14. The method as claimed in claim 12 or 13, further comprising the steps of:
transmitting a data transmission request message to a base station if the communication unit is switched to a normal mode; and
receiving data transmitted from the base station.

15. The method as claimed in any of claims 12 to 14, wherein the mode-setting value is either a first mode value for maintaining the communication unit in the sleep mode or a second mode value for switching the communication unit to a normal mode.

16. The method as claimed in claim 15, wherein the controlling step comprises the step of:
if it is checked that the mode-setting value is the first mode value, continuously maintaining the sleep mode of the communication unit.

17. The method as claimed in claim 15, wherein the controlling step comprises the steps of:
if it is checked that the mode-setting value is the second mode value, generating a trigger signal for switching the communication unit to the normal mode; and
controlling the communication unit such that the communication unit is switched to the normal mode in response to the trigger signal.

18. The method as claimed in any of claims 12 to 17, wherein the checking step comprises the step of checking the mode-setting value in a polling scheme.

19. The method as claimed in any of claims 12 to 18, wherein the apparatus is a mobile phone, a notebook computer, or a PDA.

20. A method of controlling a mode of a communication apparatus, comprising:
receiving, by the communication apparatus, a message from a base station; and
selectively switching, by the communication apparatus, a mode state of the communication apparatus, between a sleep mode and a normal mode according to the received message.
